# EUROPÄISCHE PATENTSCHRIFT

(11) **EP 2 791 546 B1**
(45) Veröffentlichungstag und Bekanntmachung des Hinweises auf die Patenterteilung: **12.06.2019**
(21) Anmeldenummer: 12797864.1
(22) Anmeldetag: 03.12.2012
(51) Int. Cl.: F16H 3/00

(54) **DOPPELKUPPLUNGSGETRIEBE**
DUAL-CLUTCH TRANSMISSION
BOÎTE DE VITESSES À DOUBLE EMBRAYAGE

(30) Priorität: 14.12.2011 DE 102011088605
(43) Veröffentlichungstag der Anmeldung: 22.10.2014
(73) Patentinhaber: ZF Friedrichshafen AG, 88046 Friedrichshafen (DE)
(72) Erfinder: MICHEL, Christian, 88214 Ravensburg (DE); WAFZIG, Juergen, 88097 Eriskirch (DE); WECHS, Michael, 88138 Sigmarszell (DE); RENNINGER, Markus, 97714 Oerlenbach (DE); ROSEMEIER, Thomas, 88074 Meckenbeuren (DE); KALTENBACH, Johannes, 88048 Friedrichshafen (DE)
(86) Internationale Anmeldenummer: PCT/EP2012/074203
(87) Internationale Veröffentlichungsnummer: WO 2013/087435

(56) Entgegenhaltungen:
- EP-A1- 2 060 827
- WO-A2-99/33682
- DE-A1- 10 310 472
- DE-A1- 19 923 185
- DE-A1-102009 002 343

## Beschreibung

Die vorliegende Erfindung betrifft ein Doppelkupplungsgetriebe für ein Fahrzeug gemäß der im Oberbegriff des Patentanspruches 1 näher definierten Art.

Die DE102009002343 offenbart die Merkmale des Oberbegriffes des Anspruchs 1.

Beispielsweise aus den Druckschriften DE 10 2007 049 267 A1 und DE 10 2007 049 271 A1 ist jeweils ein Doppelkupplungsgetriebe mit zwei Kupplungen bekannt, deren Eingangsseiten mit einer Antriebswelle verbunden sind, wobei die Ausgangsseiten der Kupplungen jeweils mit einer von zwei koaxial zueinander angeordneten Getriebeeingangswellen verbunden sind. Ferner sind zwei Vorgelegewellen vorgesehen, welche achsparallel zueinander angeordnet sind. Den Vorgelegewellen sind jeweils drei Losräder zugeordnet, die mit Festrädern der Getriebeeingangswellen in Eingriff stehen. Um die Losräder der Vorgelegewellen schalten zu können, sind sechs Schaltelemente erforderlich. Zudem ist ein weiteres Schaltelement vorgesehen, um zwei Losräder einer Vorgelegewelle miteinander zu verbinden. Insgesamt sind zumindest drei Radebenen und eine Abtriebsradebene erforderlich, um nur sechs lastschaltfähige Übersetzungsstufen realisieren zu können, wobei eine Mehrfachnutzung von Übersetzungsstufen zum Realisieren von Windungsgängen erforderlich ist. Beim Schalten von Windungsgängen werden beide Teilgetriebe miteinander gekoppelt, so dass die Lastschaltfähigkeit des Doppelkupplungsgetriebes eingeschränkt wird.

Der vorliegenden Erfindung liegt die Aufgabe zu Grunde, ein Doppelkupplungsgetriebe der eingangs beschriebenen Gattung vorzuschlagen, welches ohne die Nutzung von Windungsgängen auskommt und vollständig lastschaltbar ausgeführt ist sowie einen möglichst geringen Bauraumbedarf hat.

Diese Aufgabe wird erfindungsgemäß mit den Merkmalen des Patentanspruches 1 gelöst, wobei sich vorteilhafte Ausgestaltungen aus den Unteransprüchen und der dazugehörigen Beschreibung sowie den Zeichnungen ergeben.

Es wird ein Doppelkupplungsgetriebe in Vorgelegebauweise für ein Fahrzeug mit zwei Kupplungen als Lastschaltelemente vorgeschlagen, deren Eingangsseiten mit einer Antriebswelle und deren Ausgangsseiten mit jeweils einer von zwei koaxial zu einer Hauptwellenachse angeordneten Getriebeeingangswellen verbunden sind. Den Getriebeeingangswellen ist jeweils ein Teilgetriebe zugeordnet. Ferner sind zumindest zwei Vorgelegewellen vorgesehen, die etwa achsparallel zueinander angeordnet sind. Den Radebenen sind Übersetzungsstufen zugeordnet sind, die über eine Abtriebsradebene mit zumindest einer Abtriebswelle verbindbar sind.

Erfindungsgemäß umfasst das Doppelkupplungsgetriebe nur sechs Radebenen mit mindestens neun zugeordneten Übersetzungsstufen, die über nur vier Doppel-Schaltelemente und zumindest ein Einfach-Schaltelement darstellbar sind. Zur Darstellung eines besonders kompakten Doppelkupplungsgetriebes können mit jeder Vorgelegewelle vorzugsweise vier Übersetzungsstufen über Doppel-Schaltelemente gekoppelt werden, wobei eine der Getriebeeingangswellen mit einer Übersetzungsstufe über ein Einfach-Schaltelement gekoppelt werden kann. Auf diese Weise werden bei dem erfindungsgemäßen Doppelkupplungsgetriebe mindestens neun Gangstufen realisiert, ohne dass Doppelnutzungen von Übersetzungsstufen, das heißt Windungsgänge, verwendet werden müssen. Zu dem ergibt sich eine sehr gute Lastschaltfähigkeit und auch bei Bedarf eine gute Hybridisierungsfähigkeit.

Ein weiterer Vorteil bei dem vorgeschlagenen Doppelkupplungsgetriebe ergibt sich daraus, dass zum Betätigen der vorgesehenen Schaltelemente lediglich fünf Aktuatoren erforderlich sind. Hieraus ergibt sich einerseits ein besonders geringer Bauraumbedarf und zu dem auch eine Kostenersparnis aufgrund der geringen Anzahl von erforderlichen Aktuatoren.

Mit besonderem Vorteil kann das erfindungsgemäße Doppelkupplungsgetriebe durch unterschiedliche Positionierungen der Radebenen bzw. der den Radebenen zugeordneten Stirnradstufen bzw. Zahnradstufen und/oder der Schaltelemente bzw. Synchronisierungen funktionsgleich umgestaltet werden, wenn die Zuordnung der einzelnen Schaltelemente zu den Stirnradstufen bzw. Übersetzungsstufen beibehalten wird. Auf diese Weise wird auch bei einer veränderten Anordnung der Übersetzungsstufen bzw. der Schaltelemente die jeweilige Schaltmatrix bzw. das Schaltschema für die sich daraus ergebenden Radsatzvarianten nicht verändert.

Im Rahmen einer möglichen Ausgestaltung des erfindungsgemäßen Doppelkupplungsgetriebes können Vertauschungen von Bauteilen der beiden Teilgetriebe vorgesehen sein, wobei unter dem Begriff Bauteile Zahnräder und auch Schaltelemente des Doppelkupplungsgetriebes zu verstehen ist. Beispielsweise können die gesamten oder auch nur ein Teil der Bauteile innerhalb des ersten Teilgetriebes an vorbestimmten Spiegelebenen gespiegelt bzw. geklappt werden, um eine Radsatzvariante zu erhalten, die funktionsgleich mit der Grundvariante ist. Es ist auch möglich, dass die gesamten oder auch nur ein Teil der Bauteile innerhalb des zweiten Teilgetriebes an einer vorbestimmten Spiegelebene spiegelbar sind, um eine weitere Radsatzvariante zu erhalten, die funktionsgleich mit der Grundvariante ist. Darüber hinaus ist es auch denkbar, dass die Zuordnung der Teilgetriebe zur ersten Kupplung und zur zweiten Kupplung vertauschbar sind, indem die Teilgetriebe an einer Spiegelebene, welche zwischen den beiden Teilgetrieben angeordnet ist, spiegelbar sind, um eine weitere funktionsgleiche Radsatzvariante zu halten.

Im Rahmen einer weiteren Ausführungsvariante des erfindungsgemäßen Doppelkupplungsgetriebes kann vorgesehen sein, dass unterschiedliche und/oder zusätzliche Abtriebe bzw. Abtriebswellen vorgesehen werden. Die Abtriebswelle des Doppelkupplungsgetriebes steht über eine Abtriebsradebene mit der ersten und der zweiten Vorgelegewelle in Verbindung, wobei je nach Einbaulage und entsprechend vorhandenem Bauraum sowie nach Verzahnungsanforderungen die Abtriebswelle günstig im Getrieberaum angeordnet werden kann. Die zumindest eine anzutreibende Achse des Fahrzeuges kann somit an bauraumgünstigen Positionen mit dem Getriebeabtrieb verbunden werden.

Darüber hinaus kann bei dem vorgeschlagenen Doppelkupplungsgetriebe gemäß einer nächsten Ausführung vorgesehen sein, dass eine Hybridisierung vorgenommen wird. Der Anbindungsort einer oder mehrerer elektrischer Maschinen sollte vorzugsweise derart gewählt werden, dass sowohl die Verbindung der elektrischen Maschine zur Doppelkupplung als auch die Verbindung der elektrischen Maschine zum Abtrieb jeweils durch ein Schaltelement bzw. eine Synchronisierung oder dergleichen des Radsatzes schaltbar ist. Auf diese Weise ist sowohl eine Standladefähigkeit als auch ein elektrisches Fahren ohne Schleppverluste bei der Doppelkupplung möglich. Dazu kann die Anbindung der elektrischen Maschine an einer Welle, an einem Festrad, an einem Losrad und/oder an einem zusätzlichen Zahnrad des Radsatzes vorgesehen sein.

Mit den vorgesehenen Schaltelementen, die auch als Koppelelemente oder Synchronisierungen ausgeführt sein können, werden im aktivierten bzw. geschalteten Zustand beispielsweise ein Losrad mit einer zugeordneten Welle, zum Beispiel einer Vollwelle oder einer Hohlwelle verbunden. Es ist auch denkbar, dass die Schaltelemente zum Verbinden von Wellen untereinander verwendet werden.

Nachfolgend wird die vorliegende Erfindung anhand der Zeichnungen weiter erläutert. Es zeigen:
Figur 1 eine schematische Ansicht einer möglichen Ausführungsvariante eines erfindungsgemäßen Doppelkupplungsgetriebe;
Figur 2 eine Schaltmatrix des Doppelkupplungsgetriebes gemäß Figur 1;
Figur 3 eine Zuordnungstabelle zwischen Schaltelementen und Gangstufen für funktionsgleiche Radsatzvarianten;
Figur 4 eine schematische Ansicht des Doppelkupplungsgetriebes mit Radsatzvariationen durch binomiale Vertauschungen von Übersetzungsstufen innerhalb des ersten Teilgetriebes;
Figur 5 eine schematische Ansicht des Doppelkupplungsgetriebes mit Radsatzvariationen durch binomiale Vertauschungen von Übersetzungsstufen innerhalb des zweiten Teilgetriebes;
Figur 6 eine schematische Ansicht des Doppelkupplungsgetriebes mit Radsatzvariationen durch Spiegelungen von Bauteilen innerhalb der Teilgetriebe an senkrecht zur Hauptwellenachse ausgerichteten Spiegelebenen;
Figur 7 eine schematische Ansicht des Doppelkupplungsgetriebes mit Radsatzvariationen durch Spiegelungen von Bauteilen innerhalb der Teilgetriebe an entlang der Hauptwellenachse verlaufenden Spiegelebenen;
Figur 8 eine schematische Ansicht des Doppelkupplungsgetriebes mit einer Radsatzvariation mit vertauschten Teilgetrieben;
Figur 9 eine schematische Ansicht des Doppelkupplungsgetriebes mit Variationen bezüglich der Abtriebsposition;
Figur 10 eine schematische Ansicht des Doppelkupplungsgetriebes mit einer möglichen Ausführungsvariante zur Hybridisierung; und
Figur 11 eine schematische Ansicht des Doppelkupplungsgetriebes mit einer weiteren Ausführungsvariante zur Hybridisierung.

In den Figuren sind verschiedene Ausführungsvarianten eines erfindungsgemäßen Doppelkupplungsgetriebes beispielhaft dargestellt. Das Doppelkupplungsgetriebe in Vorgelegebauweise für ein Fahrzeug umfasst eine Doppelkupplung mit einer ersten Kupplung K1 und einer zweiten Kupplung K2, deren Eingangsseiten mit einer Antriebswelle AN und deren Ausgangsseiten mit jeweils einer von zwei koaxial zu einer Hauptwellenachse angeordneten Getriebeeingangswellen EW1, EW2 verbunden sind. Die erste Getriebeeingangswelle EW1, die mit der ersten Kupplung K1 verbunden ist, ist als Vollwelle ausgeführt und die zweite Getriebeeingangswelle EW2, die mit der zweiten Kupplung K2 verbunden ist, ist als Hohlwelle ausgeführt.

Der ersten Getriebeeingangswelle EW1 ist das erste Teilgetriebe zugeordnet, wobei zwei koaxial zur Hauptwellenachse angeordnete Festräder Z4, Z5 und ein koaxial zur Hauptwellenachse angeordnetes Losrad Z6 an der ersten Getriebeeingangswelle EW1 vorgesehen sind. Der zweiten Getriebeeingangswelle EW2 ist das zweite Teilgetriebe zugeordnet, wobei drei koaxial zur Hauptwellenachse angeordnete Festräder Z1, Z2 und Z3 vorgesehen sind.

Ferner umfasst das Doppelkupplungsgetriebe eine erste Vorgelegewellen VW1 und eine zweite Vorgelegewelle VW2, die achsparallel zueinander angeordnet sind. Der ersten Vorgelegewelle VW1 sind vier koaxial zur ersten Vorgelegewellenachse angeordnete Losräder Z7, Z8, Z9 und Z10 sowie ein Festrad Z17 als Abtriebskonstante zugeordnet. Der zweiten Vorgelegewelle VW2 sind vier koaxial zur zweiten Vorgelegewellenachse angeordnete Losräder Z11, Z12, Z13, Z14 und zwei Festräder Z15, Z18 zugeordnet, wobei das Festrad Z18 als Abtriebskonstante vorgesehen ist.

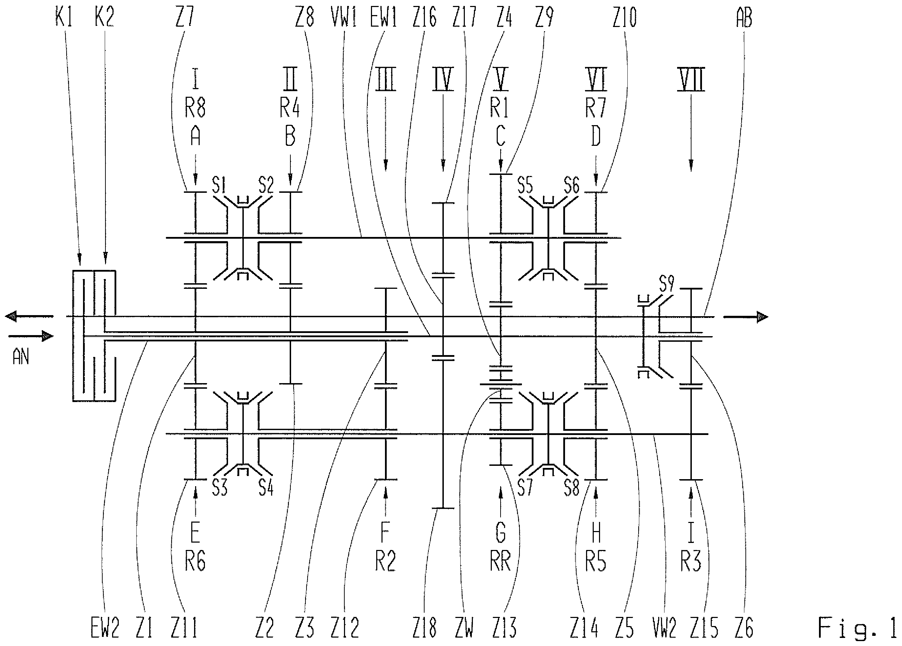

Aus den Figuren 1 und 4 bis 11 ist ersichtlich, dass das Doppelkupplungsgetriebe nur sechs Radebenen I, II, III, V, VI, VII und eine Abtriebsradebene IV sowie nur 19 Zahnräder umfasst, wobei drei Radebenen V, VI, VII dem ersten Teilgetriebe und drei Radebenen I, II, III dem zweiten Teilgetriebe zugeordnet sind. Die Abtriebsradebene IV liegt zwischen den beiden Teilgetrieben. Über die sechs Radebenen I, II, III, V, VI, VII mit den diskreten Übersetzungsstufen A, B, C, D, E, F, G, H, I sind zumindest acht Vorwärtsgangstufen R1, R2, R3, R4, R5, R6, R7, R8 und eine Rückwärtsgangstufe RR darstellbar. Zum Schalten der neun Übersetzungsstufen A, B, C, D, E, F, G, H, I sind nur vier Doppel-Schaltelemente S1-S2, S3-S4, S5-S6 und S7-S8 sowie ein Einfach-Schaltelement S9 vorgesehen. Bei der beispielhaft dargestellten Ausführung des Doppelkupplungsgetriebes sind dem ersten Teilgetriebe die ungeraden Vorwärtsgangstufen R1, R3, R5, R7 sowie die Rückwärtsgangstufe RR und dem zweiten Teilgetriebe die geraden Vorwärtsgangstufen R2, R4, R6, R8 zugeordnet, so dass ein vollständig lastschaltbares Doppelkupplungsgetriebe realisiert wird.

In der ersten Radebene I steht das Festrad Z1 der zweiten Getriebeeingangswelle EW2 sowohl mit dem Losrad Z7 der ersten Vorgelegewelle VW1 als auch mit dem Festrad Z11 der zweiten Vorgelegewelle VW2 in Eingriff, wobei dem Losrad Z7 das Schaltelement S1 zum Verbinden mit der ersten Vorgelegewelle VW1 und dem Losrad Z11 das Schaltelement S3 zum Verbinden mit der zweiten Vorgelegewelle VW2 zugeordnet sind. In der zweiten Radebene II steht das Festrad Z2 der zweiten Getriebeeingangswelle EW2 mit dem Losrad Z8 der ersten Vorgelegewelle VW 1 in Eingriff, wobei dem Losrad Z8 das Schaltelement S2 zum Verbinden mit der ersten Vorgelegewelle VW1 zugeordnet ist. In der dritten Radebene III steht das Festrad Z3 der zweiten Getriebeeingangswelle EW2 mit dem Losrad Z12 der zweiten Vorgelegewelle VW2 in Eingriff, wobei dem Losrad Z12 das Schaltelement S4 zum Verbinden mit der zweiten Vorgelegewelle VW2 zugeordnet ist. In der vierten Radebene IV als Abtriebsradebene steht das Festrad Z16 der Abtriebswelle AB sowohl mit dem Festrad Z17 der ersten Vorgelegewelle VW1 als auch mit dem Festrad Z18 der zweiten Vorgelegewelle VW2 in Eingriff. In der fünften Radebene V kämmt das Festrad Z4 der ersten Getriebeeingangswelle EW1 sowohl mit dem Losrad Z9 der ersten Vorgelegewelle VW1 als auch mit dem Zwischenrad ZW zur Drehrichtungsumkehr, wobei das Zwischenrad ZW mit dem Losrad Z13 der zweiten Vorgelegewelle VW2 kämmt. Dem Losrad Z9 der ersten Vorgelegewelle VW 1 ist das Schaltelement S5 zum Verbinden mit der ersten Vorgelegewelle VW1 und dem Losrad Z13 ist das Schaltelement S7 zum Verbinden mit der zweiten Vorgelegewelle VW2 zugeordnet. In der sechsten Radebene VI steht das Festrad Z5 der ersten Getriebeeingangswelle EW1 sowohl mit dem Losrad Z10 der ersten Vorgelegewelle VW1 als auch mit dem Losrad Z14 der zweiten Vorgelegewelle VW2 in Eingriff, wobei dem Losrad Z10 das Schaltelement S6 zum Verbinden mit der ersten Vorgelegewelle VW1 und dem Losrad Z14 das Schaltelement S8 zum Verbinden mit der zweiten Vorgelegewelle VW2 zugeordnet sind. In der siebenten Radebene kämmt das Losrad Z6 der ersten Getriebeeingangswelle EW1 mit dem Festrad Z15 der zweiten Vorgelegewelle VW2, wobei dem Losrad Z6 das Schaltelement S9 zum Verbinden mit der ersten Getriebeeingangswelle EW1 zugeordnet ist.

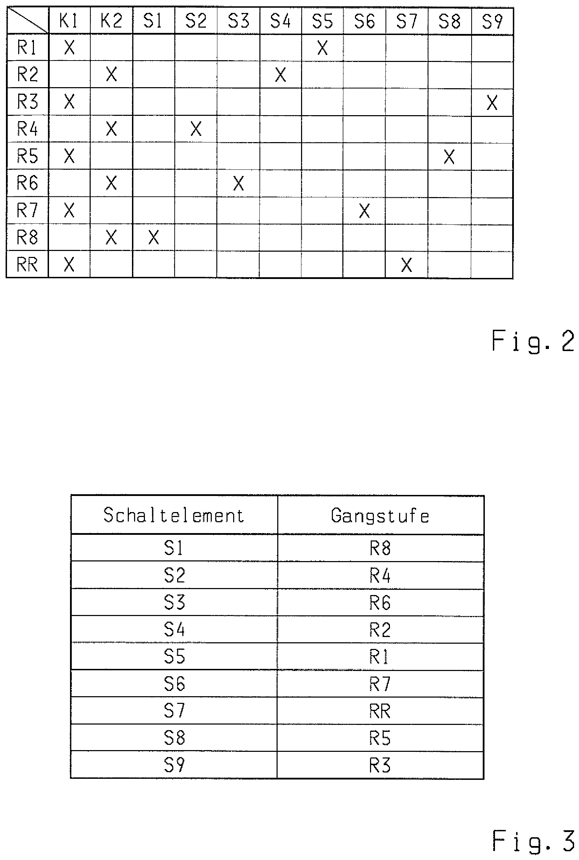

Aus der in Figur 2 dargestellten Schaltmatrix ergeben sich folgende Gangstufen. Die erste Vorwärtsgangstufe R1 ist ausgehend von der ersten Kupplung K1 über die erste Getriebeeingangswelle EW1 schaltbar, wobei der Leistungsfluss bei aktiviertem Schaltelement S5 über die fünfte Radebene V auf die erste Vorgelegewelle VW1 und über die vierte Radebene IV auf die Abtriebswelle AB übertragen wird. Die zweite Vorwärtsgangstufe R2 ist ausgehend von der zweiten Kupplung K2 über die zweite Getriebeeingangswelle EW2 schaltbar, wobei der Leistungsfluss bei aktiviertem Schaltelement S4 über die dritte Radebene III auf die zweite Vorgelegewelle VW2 und über die vierte Radebene IV auf die Abtriebswelle AB übertragen wird. Die dritte Vorwärtsgangstufe R3 ist ausgehend von der ersten Kupplung K1 über die erste Getriebeeingangswelle EW1 schaltbar, wobei der Leistungsfluss bei aktiviertem Schaltelement S9 über die siebente Radebene VII auf die zweite Vorgelegewelle VW2 und über die vierte Radebene IV auf die Abtriebswelle AB übertragen wird. Die vierte Vorwärtsgangstufe R4 ist ausgehend von der zweiten Kupplung K2 über die zweite Getriebeeingangswelle EW2 schaltbar, wobei der Leistungsfluss bei aktiviertem Schaltelement S2 über die zweite Radebene II auf die erste Vorgelegewelle VW1 und über die vierte Radebene IV auf die Abtriebswelle AB übertragen wird. Die fünfte Vorwärtsgangstufe R5 ist ausgehend von der ersten Kupplung K1 über die erste Getriebeeingangswelle EW1 schaltbar, wobei der Leistungsfluss bei aktiviertem Schaltelement S8 über die sechste Radebene VI auf die zweite Vorgelegewelle VW2 und über die vierte Radebene IV auf die Abtriebswelle AB übertragen wird. Die sechste Vorwärtsgangstufe R6 ist ausgehend von der zweiten Kupplung K2 über die zweite Getriebeeingangswelle EW2 schaltbar, wobei der Leistungsfluss bei aktiviertem Schaltelement S3 über die erste Radebene I auf die zweite Vorgelegewelle VW2 und über die vierte Radebene IV auf die Abtriebswelle AB übertragen wird. Die siebente Vorwärtsgangstufe R7 ist ausgehend von der ersten Kupplung K1 über die erste Getriebeeingangswelle EW1 schaltbar, wobei der Leistungsfluss bei aktiviertem Schaltelement S6 über die sechste Radebene VI auf die erste Vorgelegewelle VW1 und über die vierte Radebene IV auf die Abtriebswelle AB übertragen wird. Die achte Vorwärtsgangstufe R8 ist ausgehend von der zweiten Kupplung K2 über die zweite Getriebeeingangswelle EW2 schaltbar, wobei der Leistungsfluss bei aktiviertem Schaltelement S1 über die erste Radebene I auf die erste Vorgelegewelle VW1 und über die vierte Radebene IV auf die Abtriebswelle AB übertragen wird. Die Rückwärtsgangstufe RR ist ausgehend von der ersten Kupplung K1 über die erste Getriebeeingangswelle EW1 schaltbar, wobei der Leistungsfluss bei aktiviertem Schaltelement S7 über die fünfte Radebene V auf die zweite Vorgelegewelle VW 2 und über die vierte Radebene IV auf die Abtriebswelle AB übertragen wird.

Somit ist die erste Vorwärtsgangstufe R1 der diskreten Übersetzungsstufe C des ersten Teilgetriebes, die zweite Vorwärtsgangstufe R2 der diskreten Übersetzungsstufe F des zweiten Teilgetriebes, die dritte Vorwärtsgangstufe R3 der diskreten Übersetzungsstufe I des ersten Teilgetriebes, die vierte Vorwärtsgangstufe R4 der diskreten Übersetzungsstufe B des zweiten Teilgetriebes, die fünfte Vorwärtsgangstufe R5 der diskreten Übersetzungsstufe H des ersten Teilgetriebes, die sechste Vorwärtsgangstufe R6 der diskreten Übersetzungsstufe E des zweiten Teilgetriebes, die siebente Vorwärtsgangstufe R7 der diskreten Übersetzungsstufe D des ersten Teilgetriebes, die achte Vorwärtsgangstufe R8 der diskreten Übersetzungsstufe A des zweiten Teilgetriebes und die Rückwärtsgangstufe RR der diskreten Übersetzungsstufe G des zweiten Teilgetriebes beispielhaft zugeordnet.

Aus der Zuordnungstabelle gemäß Figur 3 ergibt sich die Zuordnung bezüglich Schaltelement und Gangstufe, um bei den nachfolgend beschriebenen Radsatzvarianten, die sich durch eine neue Anordnung der Stirnradstufen und der Schaltelemente ergeben, die gleiche Schaltmatrix bzw. das gleiche Schaltschema verwenden zu können. Hiernach ist das Schaltelement S1 der achten Vorwärtsgangstufe R8, das Schaltelement S2 der vierten Vorwärtsgangstufe R4, das Schaltelement S3 der sechsten Vorwärtsgangstufe R6, das Schaltelement S4 der zweiten Vorwärtsgangstufe R2, das Schaltelement S5 der ersten Vorwärtsgangstufe R1, das Schaltelement S6 der siebenten Vorwärtsgangstufe R7, das Schaltelement S7 der Rückwärtsgangstufe RR, dass Schaltelement S8 der fünften Vorwärtsgangstufe R5 und das Schaltelement S9 der dritten Vorwärtsgangstufe R3 zugeordnet.

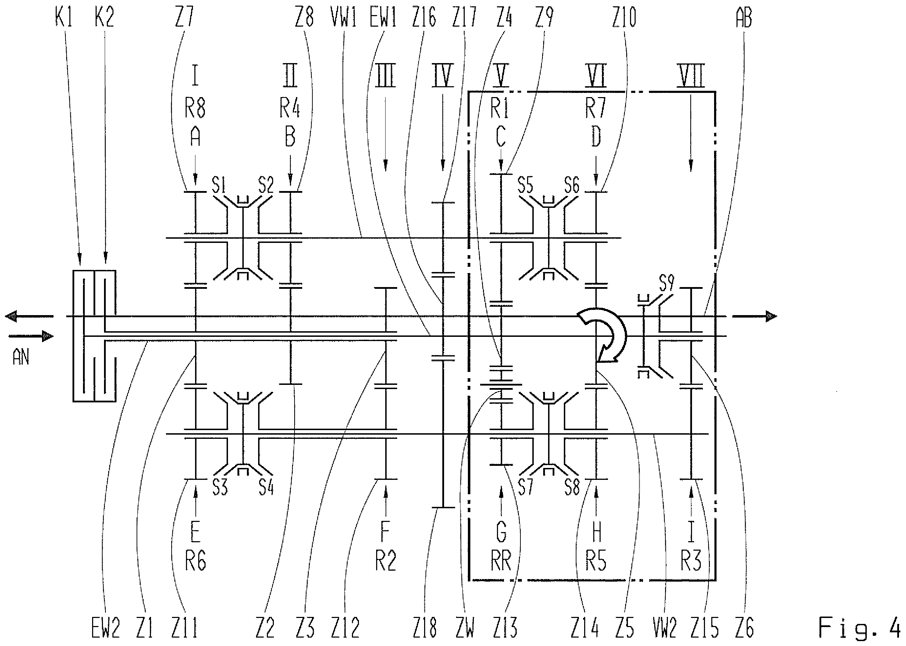

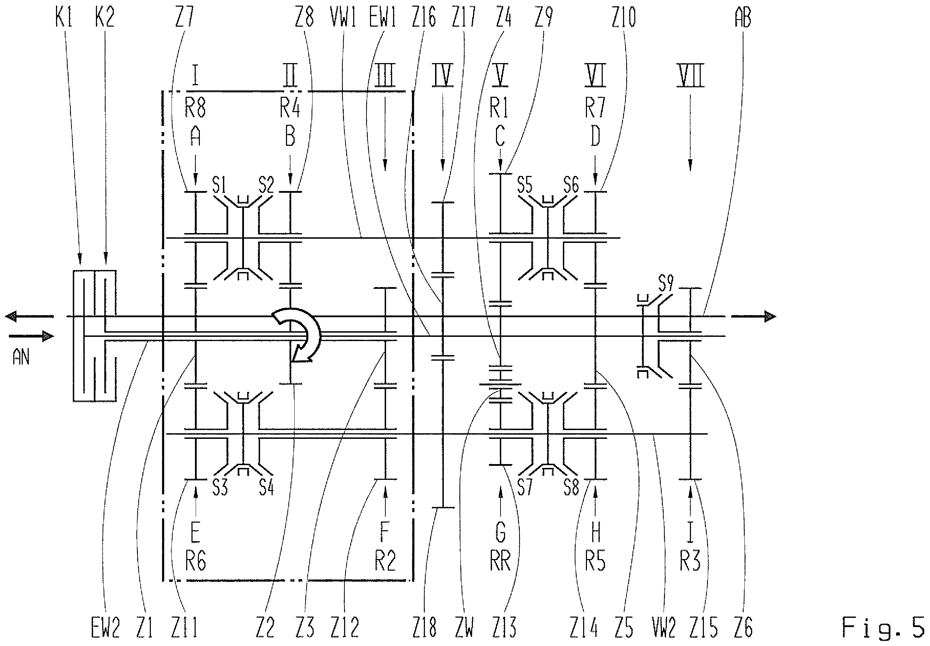

In den Figuren 4 und 5 sind Variationsmöglichkeiten am Beispiel des Radsatzes des erfindungsgemäßen Doppelkupplungsgetriebes gezeigt, wobei die Variationen durch Kästen und Pfeile angedeutet sind. In Figur 4 ist eine Radsatzvariation dargestellt, bei der die Stirnradstufen bzw. Übersetzungsstufen C, D, G, H, I des ersten Teilgetriebes untereinander binomial vertauschbar sind. Dies bedeutet, dass jede der vorgenannten Übersetzungsstufe an eine beliebige Position einer anderen Übersetzungsstufe innerhalb des Kastens positionierbar ist. In Figur 5 ist eine Radsatzvariation dargestellt, bei der die Stirnradstufen bzw. Übersetzungsstufen A, B, E, F des zweiten Teilgetriebes untereinander binomial vertauschbar sind. Dies bedeutet, dass jede der vorgenannten Übersetzungsstufe an eine beliebige Position einer anderen Übersetzungsstufe innerhalb des Kastens positionierbar ist.

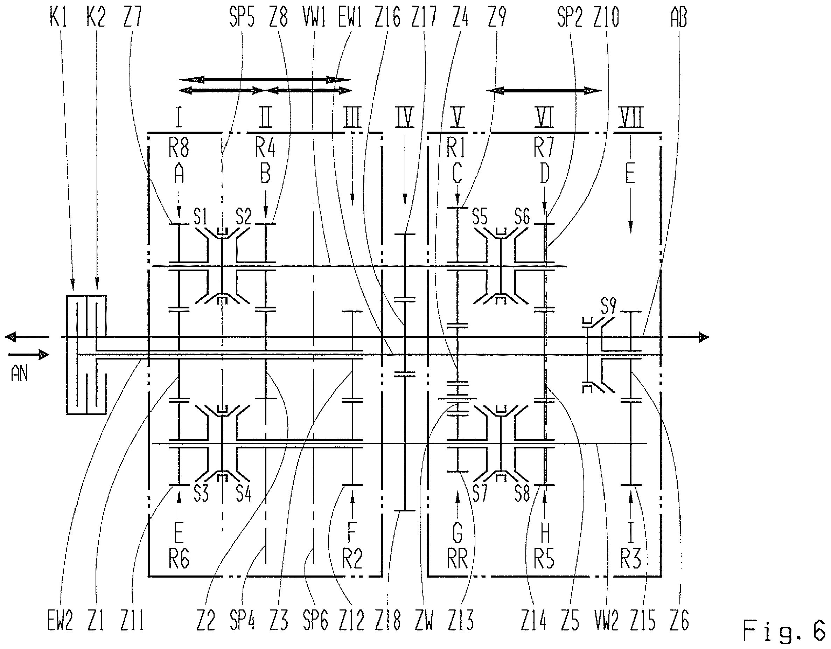

In den Figuren 6 bis 8 sind Variationsmöglichkeiten am Beispiel des Radsatzes des erfindungsgemäßen Doppelkupplungsgetriebes gezeigt, bei denen durch Spiegelungen innerhalb der Teilgetriebe oder auch zwischen den Teilgetrieben Varianten erzeugt werden, die durch Kästen und Pfeile angedeutet sind.

In Figur 6 sind bezogen auf die Zeichnungsebene vertikal bzw. senkrecht zur Hauptwellenachse ausgerichtete Spiegelebenen SP4, SP5, SP6 bezogen auf das zweite Teilgetriebe und eine Spiegelebene SP2 bezogen auf das erste Teilgetriebe angedeutet. Die Spiegelebene SP2 verläuft entlang der sechsten Radebene VI, so dass die Bauteile, das heißt die Zahnräder und Schaltelemente innerhalb des ersten Teilgetriebes vertauscht werden, indem die fünfte Radebene und die siebente Radebene miteinander vertauscht werden bzw. jeweils an der Spiegelebene SP2 gespiegelt bzw. geklappt werden. Die Spiegelebene SP4 verläuft entlang der zweiten Radebene II, so dass die Bauteile, d. h. die Zahnräder und Schaltelemente innerhalb des zweiten Teilgetriebes vertauscht werden, indem die erste Radebene I und die dritte Radebene III miteinander vertauscht werden, indem diese an der Spiegelebene SP4 gespiegelt bzw. geklappt werden. Die Spiegelebene SP5 verläuft mittig zwischen der ersten Radebene I und der zweiten Radebene II, so dass die Bauteile innerhalb des zweiten Teilgetriebes vertauscht werden, indem die erste Radebene I und die zweite Radebene II miteinander vertauscht werden, indem diese an der Spiegelebene SP5 gespiegelt bzw. geklappt werden. Die Spiegelebene SP6 verläuft mittig zwischen der zweiten Radebene II und der dritten Radebene III, so dass die Bauteile innerhalb des zweiten Teilgetriebes vertauscht werden, indem die zweite Radebene II und die dritte Radebene III miteinander vertauscht werden, indem diese an der Spiegelebene SP 6 gespiegelt bzw. geklappt werden.

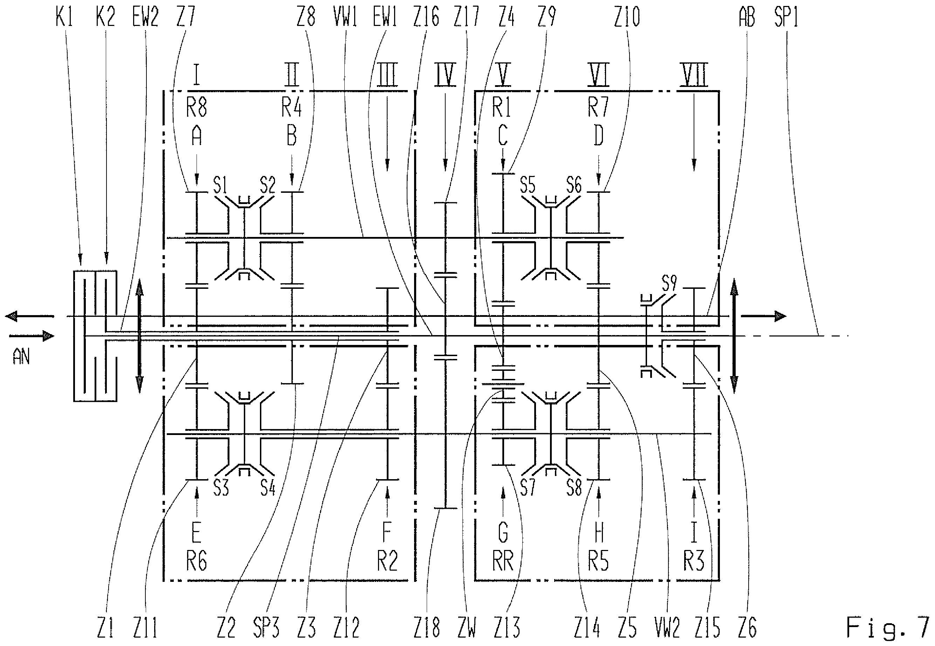

In Figur 7 sind bezogen auf die Zeichnungsebene horizontal ausgerichtete und entlang der Hauptwellenachse verlaufende Spiegelebenen SP1 und SP3 angedeutet. Die Spiegelebene SP1 verläuft im Bereich des ersten Teilgetriebes entlang der Hauptwellenachse, so dass die in den beiden Kästen angeordneten Bauteile miteinander vertauscht werden, indem die Bauteile der beiden Kästen an der Spiegelebene SP1 gespiegelt bzw. geklappt werden. Die Spiegelebene SP3 verläuft im Bereich des zweiten Teilgetriebes entlang der Hauptwellenachse, so dass die in den beiden Kästen angeordneten Bauteile miteinander vertauscht werden, indem die Bauteile der beiden Kästen an der Spiegelebene SP3 gespiegelt bzw. geklappt werden.

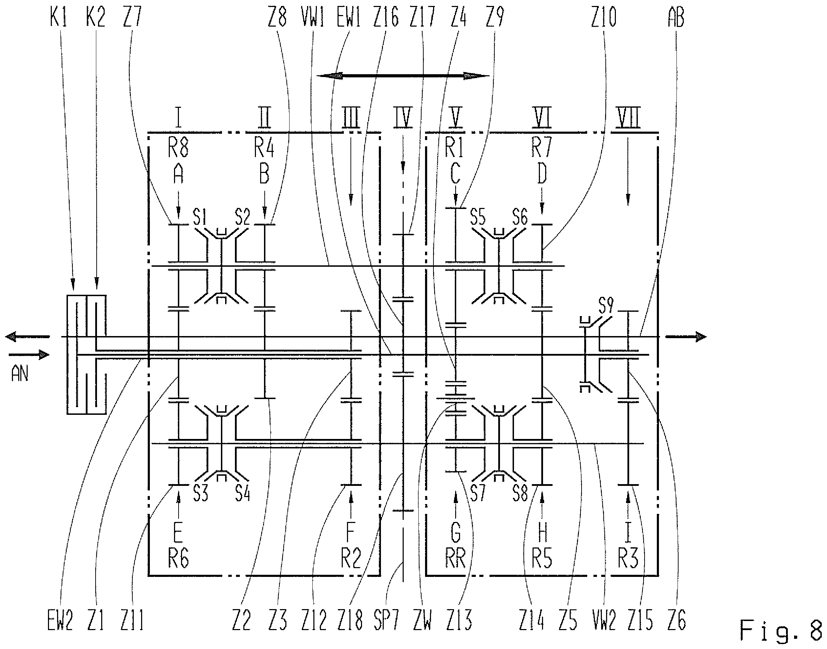

In Figur 8 ist eine Variation des Radsatzes des erfindungsgemäßen Doppelkupplungsgetriebes gezeigt, bei der die Zuordnung der Teilgetriebe zu den beiden Eingangskupplungen K1 und K2 vertauscht werden, ohne dabei das Schaltschema zu verändern. Dazu ist zwischen den beiden Teilgetrieben eine senkrecht zur Hauptwellenachse verlaufende Spiegelebene SP7 vorgesehen, an der jeweils die in den Kästen enthaltenen Bauteile bzw. Teilgetriebe geklappt bzw. gespiegelt werden. Die Spiegelebene SP7 trennt die beiden Teilgetriebe voneinander.

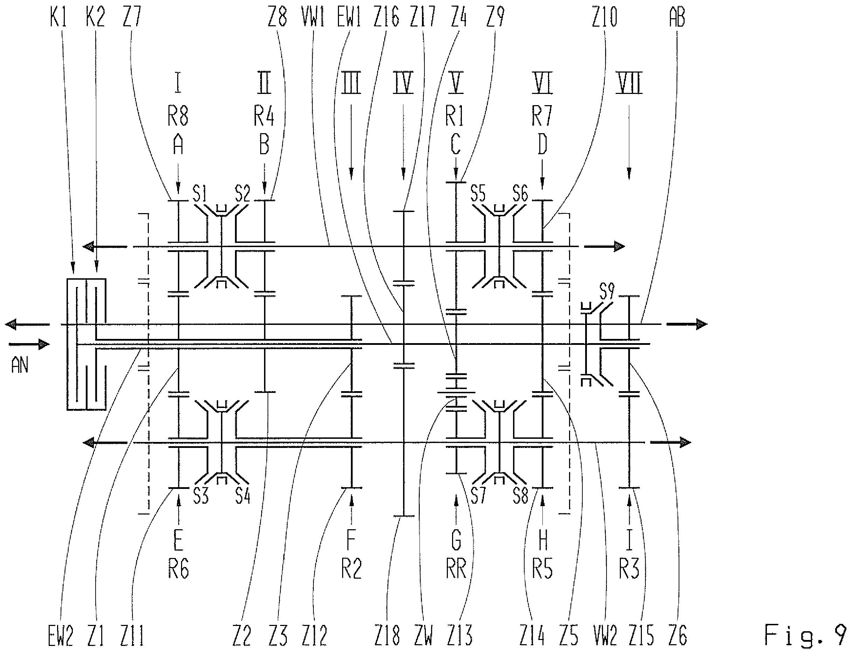

Gemäß Figur 9 ist ein Radsatz des Doppelkupplungsgetriebes mit Abtriebsvarianten dargestellt, wobei durch gestrichelte Linien alternative Anordnungspositionen der vierten Radebene IV als Abtriebsradebene angedeutet sind. Da die erste Vorgelegewelle VW1 und die zweite Vorgelegewelle VW2 über die vierte Radebene IV als Abtriebsradebene miteinander gekoppelt sind, ist es möglich, dass mehrere an den vorhandenen Bauraum und an die Verzahnungsanforderungen angepasste Abtriebpositionen darstellbar sind, um eine oder mehrere Antriebsachsen des Fahrzeuges mit dem Getriebeabtrieb zu verbinden. Aus Figur 9 ist ersichtlich, dass, beispielhaft durch Pfeile angedeutet, sechs verschiedene Abtriebmöglichkeiten darstellbar sind, die entweder an der Abtriebswelle AB oder an einer der Vorgelegewellen VW1, VW2 vorgesehen sind.

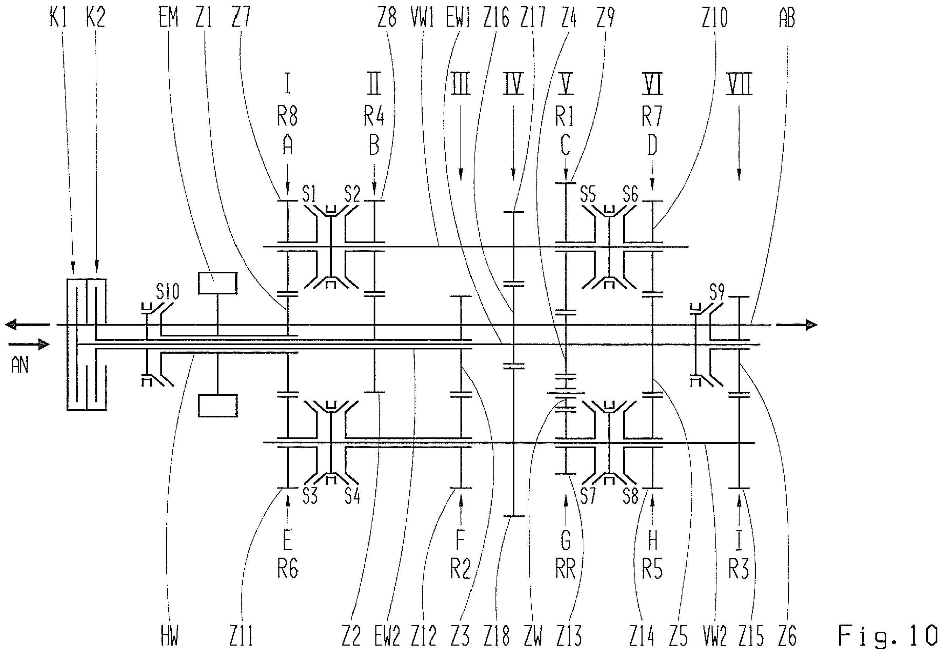

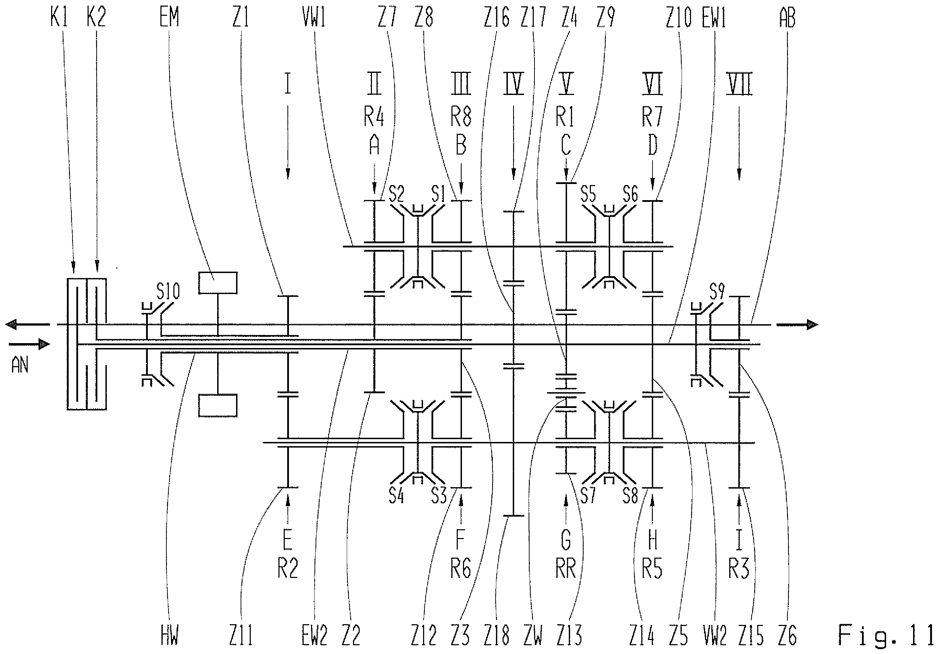

In den Figuren 10 und 11 sind mögliche Ausführungsvarianten einer Hybridisierung des erfindungsgemäßen Doppelkupplungsgetriebes dargestellt. Hierzu ist eine elektrische Maschine EM vorgesehen. Als möglicher Anbindungsort der elektrischen Maschine EM ist beispielhaft eine Verbindung mit der ersten Radebene I und den zugeordneten Übersetzungsstufen A und E vorgesehen. Dazu ist eine Hohlwelle HW vorgesehen, die koaxial zur Hauptwellenachse angeordnet ist. Die elektrische Maschine EM ist mit der Hohlwelle HW verbunden, wobei die Hohlwelle HW zudem auch das Festrad Z1 umfasst. Die Hohlwelle HW kann über ein zusätzliches Einfach-Schaltelement S10 mit der zweiten Getriebeeingangswelle EW2 verbunden werden. Beispielsweise ist das elektrische Fahren mit den Übersetzungsstufen A und E bei offenem Schaltelement S10 ohne die Schleppverluste der Doppelkupplung möglich. Die Schaltmatrix des vorbeschriebenen Radsatzes gilt auch für den Hybridbetrieb, wenn das Schaltelement S10 geschlossen ist.

Um bei der elektrischen Maschine EM eine günstigere Übersetzung beim rein elektrischen Fahren vorzusehen, können die Radebenen des Doppelkupplungsgetriebes umsortiert werden. In Figur 11 ist beispielhaft eine derartige Variante dargestellt, bei der die zweite Vorwärtsgangstufe R2 der Übersetzungsstufe E in der ersten Radebene I zugeordnet ist. Dadurch ist das elektrische Fahren in der zweiten Vorwärtsgangstufe R2 bei offenem Schaltelement S10 ohne die Schleppverluste der Doppelkupplung möglich. Die Schaltmatrix wird durch das Umsortieren nicht verändert. Somit gilt die Schaltmatrix des vorbeschriebenen Radsatzes auch für den Hybridbetrieb, wenn das Schaltelement S10 geschlossen ist.

### Bezugszeichen

- AN: Antriebswelle
- AB: Abtriebswelle
- EW1: erste Getriebeeingangswelle als Vollwelle
- EW2: zweite Getriebeeingangswelle als Hohlwelle
- HW: Hohlwelle der zweiten Getriebeeingangswelle
- VW1: erste Vorgelegewelle
- VW2: zweite Vorgelegewelle
- K1: erste Kupplung
- K2: zweite Kupplung
- A: Übersetzungsstufe
- B: Übersetzungsstufe
- C: Übersetzungsstufe
- D: Übersetzungsstufe
- E: Übersetzungsstufe
- F: Übersetzungsstufe
- G: Übersetzungsstufe
- H: Übersetzungsstufe
- I: Übersetzungsstufe
- S1: Schaltelement
- S2: Schaltelement
- S3: Schaltelement
- S4: Schaltelement
- S5: Schaltelement
- S6: Schaltelement
- S7: Schaltelement
- S8: Schaltelement
- S9: Schaltelement
- S10: Schaltelement
- I: erste Radebene
- II: zweite Radebene
- III: dritte Radebene
- IV: vierte Radebene bzw. Abtriebsradebene
- V: fünfte Radebene
- VI: sechste Radebene
- VII: siebente Radebene
- Z1: Festrad der zweiten Getriebeeingangswelle
- Z2: Festrad der zweiten Getriebeeingangswelle
- Z3: Festrad der zweiten Getriebeeingangswelle
- Z4: Festrad der ersten Getriebeeingangswelle
- Z5: Festrad der ersten Getriebeeingangswelle
- Z6: Losrad der ersten Getriebeeingangswelle
- Z7: Losrad der ersten Vorgelegewelle
- Z8: Losrad der ersten Vorgelegewelle
- Z9: Losrad der ersten Vorgelegewelle
- Z10: Losrad der ersten Vorgelegewelle
- Z11: Losrad der zweiten Vorgelegewelle
- Z12: Losrad der zweiten Vorgelegewelle
- Z13: Losrad der zweiten Vorgelegewelle
- Z14: Losrad der zweiten Vorgelegewelle
- Z15: Festrad der zweiten Vorgelegewelle
- Z 16: Festrad der Abtriebswelle
- Z17: Festrad der ersten Vorgelegewelle
- Z18: Festrad der zweiten Vorgelegewelle
- ZW: Zwischenrad zur Drehrichtungsumkehr
- SP1: Spiegelebene
- SP2: Spiegelebene
- SP3: Spiegelebene
- SP4: Spiegelebene
- SP5: Spiegelebene
- SP6: Spiegelebene
- SP7: Spiegelebene
- EM: elektrische Maschine
- R1: erste Vorwärtsgangstufe
- R2: zweite Vorwärtsgangstufe
- R3: dritte Vorwärtsgangstufe
- R4: vierte Vorwärtsgangstufe
- R5: fünfte Vorwärtsgangstufe
- R6: sechste Vorwärtsgangstufe
- R7: siebente Vorwärtsgangstufe
- R8: achte Vorwärtsgangstufe
- RR: Rückwärtsgangstufe

## Patentansprüche

1. Doppelkupplungsgetriebe in Vorgelegebauweise für ein Fahrzeug, mit zwei Kupplungen (K1, K2), deren Eingangsseiten mit einer Antriebswelle (AN) und deren Ausgangsseiten mit jeweils einer von zwei koaxial zu einer Hauptwellenachse angeordneten Getriebeeingangswellen (EW1, EW2) verbunden sind, denen jeweils ein Teilgetriebe zugeordnet ist, mit zumindest zwei Vorgelegewellen (VW1, VW2), mit mehreren Radebenen (I, II, III, V, VI, VII), denen Übersetzungsstufen (A, B, C, D, E, F, G, H, I) zugeordnet sind, und mit zumindest einer Abtriebswelle (AB), die über eine Abtriebsradebene (IV) mit den Teilgetrieben verbindbar ist, **dadurch gekennzeichnet, dass** nur sechs Radebenen (I, II, III, V, VI, VII), ohne die Abtriebsradebene (IV), mit mindestens neun zugeordneten Übersetzungsstufen (A, B, C, D, E, F, G, H, I) über nur vier Doppel-Schaltelemente (S1-S2, S3-S4, S5-S6, S7-S8) und über zumindest ein Einfach-Schaltelement (S9, S10) darstellbar sind, wobei jede Vorgelegewelle (VW1, VW2) mit vier Übersetzungsstufen (A, B, C, D; E, F, G, H) der zumindest neun Übersetzungsstufen über Doppel-Schaltelemente (S1-S2, S3-S4, S5-S6, S7-S8) der nur vier Doppel-Schaltelemente koppelbar ist und wobei eine der Getriebeeingangswellen (EW1, EW2) mit einer weiteren Übersetzungsstufe (I) der zumindest neun Übersetzungsstufen über ein erste Einfach-Schaltelement (S9) des zumindest einen Einfach-Schaltelements (S9,S10) koppelbar ist, wobei die Abtriebsradebene (IV) zwischen den beiden Teilgetrieben liegt.

2. Doppelkupplungsgetriebe nach Anspruch 1, **dadurch gekennzeichnet, dass** die erste Getriebeeingangswelle (EW1) als Vollwelle ausgeführt ist, welcher zwei koaxial zur Hauptwellenachse angeordnete Festräder (Z4, Z5) und ein koaxial zur Hauptwellenachse angeordnetes Losrad (Z6) zugeordnet sind, wobei das Losrad (Z6) über das erste Einfach-Schaltelement (S9) mit der ersten Getriebeeingangswelle (EW1) verbindbar ist.

3. Doppelkupplungsgetriebe nach einem der vorangehenden Ansprüche, **dadurch gekennzeichnet, dass** die zweite Getriebeeingangswelle (EW2) als Hohlwelle ausgeführt ist, welcher drei koaxial zur Hauptwellenachse angeordnete Festräder (Z1, Z2, Z3) zugeordnet sind.

4. Doppelkupplungsgetriebe nach einem der vorangehenden Ansprüche, **dadurch gekennzeichnet, dass** die erste Vorgelegewelle (VW1) als Vollwelle ausgeführt ist, die koaxial zu einer ersten Vorgelegewellenachse angeordnet ist, wobei der ersten Vorgelegewelle (VW1) ein koaxial zur ersten Vorgelegewellenachse angeordnetes Festrad (Z17) als Abtriebskonstante und vier koaxial zur ersten Vorgelegewellenachse angeordnete Losräder (Z7, Z8, Z9, Z10) zugeordnet sind, wobei das erste Losrad (Z7) der ersten Vorgelegewelle und das zweite Losrad (Z8) der ersten Vorgelegewelle jeweils über das erste Doppel-Schaltelement (S1-S2) der nur vier Doppel-Schaltelemente sowie das dritte Losrad (Z9) der ersten Vorgelegewelle und das vierte Losrad (Z10) der ersten Vorgelegewelle jeweils über das zweite Doppel-Schaltelement (S5-S6) der nur vier Doppel-Schaltelemente mit der ersten Vorgelegewelle (VW1) verbindbar sind.

5. Doppelkupplungsgetriebe nach einem der vorangehenden Ansprüche, **dadurch gekennzeichnet, dass** die zweite Vorgelegewelle (VW2) als Vollwelle ausgeführt ist, wobei der zweiten Vorgelegewelle (VW2) zwei koaxial zur zweiten Vorgelegewellenachse angeordnete Festräder (Z18, Z15) und vier koaxial zur zweiten Vorgelegewellenachse angeordnete Losräder (Z11, Z12, Z13, Z14) zugeordnet sind, wobei das erste Losrad (Z11) der zweiten Vorgelegewelle und das zweite Losrad (Z12) der zweiten Vorgelegewelle jeweils über das dritte Doppel-Schaltelement (S3-S4) der nur vier Doppel-Schaltelemente sowie das dritte Losrad (Z13) der zweiten Vorgelegewelle und das vierte Losrad (Z14) der zweiten Vorgelegewelle jeweils über das vierte Doppel-Schaltelement (S7-S8) der nur vier Doppel-Schaltelemente mit der zweiten Vorgelegewelle (VW2) verbindbar sind und wobei das erste Festrad (Z18) der zwei koaxial zur zweiten Vorgelegewellenachse angeordnete Festräder als Abtriebskonstante vorgesehen ist.

6. Doppelkupplungsgetriebe nach Anspruch 2 und 3 und 4 und 5, **dadurch gekennzeichnet, dass** in einer ersten Radebene (I) das erste Festrad (Z1) der zweiten Getriebeeingangswelle (EW2) in der ersten Radebene sowohl mit dem ersten Losrad (Z7) der ersten Vorgelegewelle (VW1) als auch mit dem ersten Losrad (Z11) der zweiten Vorgelegewelle (VW 2) in Eingriff steht, dass in einer zweiten Radebene (II) das zweite Festrad (Z2) der zweiten Getriebeeingangswelle (EW2) in der zweiten Radebene mit dem zweiten Losrad (Z8) der ersten Vorgelegewelle (VW1) in Eingriff steht, dass in einer dritten Radebene (III) das dritte Festrad (Z3) der zweiten Getriebeeingangswelle (EW2) in der dritten Radebene mit dem zweiten Losrad (Z12) der zweiten Vorgelegewelle (VW2) in Eingriff steht, dass in einer vierten Radebene (IV) als Abtriebsradebene ein Festrad (Z16) der Abtriebswelle (AB) sowohl mit dem Festrad (Z 17) der ersten Vorgelegewelle (VW1) in der vierten Radebene als auch mit dem ersten Festrad (Z18) der zweiten Vorgelegewelle (VW2) in der vierten Radebene kämmt, dass in einer fünften Radebene (V) das erste Festrad (Z4) der ersten Getriebeeingangswelle (EW1) in der fünften Radebene sowohl mit dem dritten Losrad (Z9) der ersten Vorgelegewelle (VW1) als auch mit einem Zwischenrad (ZW) zur Drehrichtungsumkehr in Eingriff steht, wobei das Zwischenrad (ZW) mit dem dritten Losrad (Z13) der zweiten Vorgelegewelle kämmt, dass in einer sechsten Radebene (VI) das zweite Festrad (Z5) der ersten Getriebeeingangswelle (EW1) in der sechsten Radebene sowohl mit dem vierten Losrad (Z10) der ersten Vorgelegewelle (VW1) als auch mit dem vierten Losrad (Z14) der zweiten Vorgelegewelle (VW2) in Eingriff steht, und dass in einer siebenten Radebene (VII) das Losrad (Z6) der ersten Getriebeeingangswelle (EW1) mit dem zweiten Festrad (Z15) der zweiten Vorgelegewelle (VW2) in der siebten Radebene kämmt.

7. Doppelkupplungsgetriebe nach Anspruch 6, **dadurch gekennzeichnet, dass** eine erste Übersetzungsstufe (A) ausgehend von der zweiten Kupplung (K2) über die zweite Getriebeeingangswelle (EW2) schaltbar ist, wobei der Leistungsfluss bei aktiviertem ersten Schaltelement (S1) des ersten Doppel-Schaltelements über die erste Radebene (I) auf die erste Vorgelegewelle (VW1) und über die vierte Radebene (IV) auf die Abtriebswelle (AB) übertragbar ist, dass eine zweite Übersetzungsstufe (B) ausgehend von der zweiten Kupplung (K2) über die zweite Getriebeeingangswelle (EW2) schaltbar ist, wobei der Leistungsfluss bei aktiviertem zweiten Schaltelement (S2) des ersten Doppel-Schaltelements über die zweite Radebene (II) auf die erste Vorgelegewelle (VW1) und über die vierte Radebene (IV) auf die Abtriebswelle (AB) übertragbar ist, dass eine dritte Übersetzungsstufe (C) ausgehend von der ersten Kupplung (K1) über die erste Getriebeeingangswelle (EW1) schaltbar ist, wobei der Leistungsfluss bei aktiviertem ersten Schaltelements (S5) des zweiten Doppel-Schaltelements über die fünfte Radebene (V) auf die erste Vorgelegewelle (VW1) und über die vierte Radebene (IV) auf die Abtriebswelle (AB) übertragbar ist, dass eine vierte Übersetzungsstufe (D) ausgehend von der ersten Kupplung (K1) über die erste Getriebeeingangswelle (EW1) schaltbar ist, wobei der Leistungsfluss bei aktiviertem zweiten Schaltelement (S6) des zweiten Doppel-Schaltelements über die sechste Radebene (VI) auf die erste Vorgelegewelle (VW1) und über die vierte Radebene (IV) auf die Abtriebswelle (AB) übertragbar ist, dass eine fünfte Übersetzungsstufe (E) ausgehend von der zweiten Kupplung (K2) über die zweite Getriebeeingangswelle (EW2) schaltbar ist, wobei der Leistungsfluss bei aktiviertem ersten Schaltelement (S3) des dritten Doppel-Schaltelements über die erste Radebene (I) auf die zweite Vorgelegewelle (VW2) und über die vierte Radebene (IV) auf die Abtriebswelle (AB) übertragbar ist, dass eine sechste Übersetzungsstufe (F) ausgehend von der zweiten Kupplung (K2) über die zweite Getriebeeingangswelle (EW2) schaltbar ist, wobei der Leistungsfluss bei aktiviertem zweiten Schaltelement (S4) des dritten Doppel-Schaltelements über die dritte Radebene (III) auf die zweite Vorgelegewelle (VW2) und über die vierte Radebene (IV) auf die Abtriebswelle (AB) übertragbar ist, dass eine siebte Übersetzungsstufe (G) ausgehend von der ersten Kupplung (K1) über die erste Getriebeeingangswelle (EW1) schaltbar ist, wobei der Leistungsfluss bei aktiviertem ersten Schaltelement (S7) des vierten Doppel-Schaltelements über die fünfte Radebene (V) auf die zweite Vorgelegewelle (VW2) und über die vierte Radebene (IV) auf die Abtriebswelle (AB) übertragbar ist, dass eine achte Übersetzungsstufe (H) ausgehend von der ersten Kupplung (K1) über die erste Getriebeeingangswelle (EW1) schaltbar ist, wobei der Leistungsfluss bei aktiviertem zweiten Schaltelement (S8) des vierten Doppel-Schaltelements über die sechste Radebene (VI) auf die zweite Vorgelegewelle (VW2) und über die vierte Radebene (IV) auf die Abtriebswelle (AB) übertragbar ist, und dass eine neunte Übersetzungsstufe (I) ausgehend von der ersten Kupplung (K1) über die erste Getriebeeingangswelle (EW1) schaltbar ist, wobei der Leistungsfluss bei aktiviertem zweiten Schaltelement (S8) des vierten Doppel-Schaltelements über die siebente Radebene (VII) auf die zweite Vorgelegewelle (VW2) und über die vierte Radebene (IV) auf die Abtriebswelle (AB) übertragbar ist.

8. Doppelkupplungsgetriebe nach einem der vorangehenden Ansprüche, **dadurch gekennzeichnet, dass** eine/die dritte Übersetzungsstufe (C) des ersten Teilgetriebes der ersten Vorwärtsgangstufe (R1), dass eine/die sechste Übersetzungsstufe (F) des ersten Teilgetriebes der zweiten Vorwärtsgangstufe (R2), dass eine/die neunte Übersetzungsstufe (I) des ersten Teilgetriebes der dritten Vorwärtsgangstufe (R3), dass eine/die zweite Übersetzungsstufe (B) des zweiten Teilgetriebes der vierten Vorwärtsgangstufe (R4), dass eine/die achte Übersetzungsstufe (H) des ersten Teilgetriebes der fünften Vorwärtsgangstufe (R5), dass eine/die fünfte Übersetzungsstufe (E) des zweiten Teilgetriebes der sechsten Vorwärtsgangstufe (R6), dass eine/die vierte Übersetzungsstufe (D) des ersten Teilgetriebes der siebten Vorwärtsgangstufe (R7), dass eine/die erste Übersetzungsstufe (A) des zweiten Teilgetriebes der achten Vorwärtsgangstufe (R8) zugeordnet sind, und dass eine/die siebte Übersetzungsstufe (G) des zweiten Teilgetriebes der Rückwärtsgangstufe (RR) zugeordnet ist.

9. Doppelkupplungsgetriebe nach einem der vorangehenden Ansprüche, **dadurch gekennzeichnet, dass** Bauteile innerhalb des ersten Teilgetriebes an vorbestimmten Spiegelebenen (SP1, SP2) spiegelbar sind.

10. Doppelkupplungsgetriebe nach Anspruch 9, **dadurch gekennzeichnet, dass** eine erste Spiegelebene (SP1) entlang der Hauptwellenachse im Bereich des ersten Teilgetriebes verläuft.

11. Doppelkupplungsgetriebe nach Anspruch 9 oder 10, **dadurch gekennzeichnet, dass** eine zweite Spiegelebene (SP2) senkrecht zur Hauptwellenachse entlang einer/ der sechsten Radebene (VI) verläuft.

12. Doppelkupplungsgetriebe nach einem der vorangehenden Ansprüche, **dadurch gekennzeichnet, dass** Bauteile innerhalb des zweiten Teilgetriebes an Spiegelebene (SP3, SP4, SP5, SP6) spiegelbar sind.

13. Doppelkupplungsgetriebe nach Anspruch 12, **dadurch gekennzeichnet, dass** eine dritte Spiegelebene (SP3) entlang der Hauptwellenachse im Bereich des zweiten Teilgetriebes verläuft.

14. Doppelkupplungsgetriebe nach Anspruch 12 oder 13, **dadurch gekennzeichnet, dass** eine vierte Spiegelebene (SP4) senkrecht zur Hauptwellenachse entlang einer/ der zweiten Radebene (II) verläuft.

15. Doppelkupplungsgetriebe nach einem der Ansprüche 12 bis 14, **dadurch gekennzeichnet, dass** eine fünfte Spiegelebene (SP5) senkrecht zur Hauptwellenachse mittig zwischen einer/ der ersten Radebene (I) und einer/ der zweiten Radebene (II) verläuft.

16. Doppelkupplungsgetriebe nach einem der Ansprüche 12 bis 15, **dadurch gekennzeichnet, dass** eine sechste Spiegelebene (SP6) senkrecht zur Hauptwellenachse mittig zwischen einer/ der zweiten Radebene (II) und einer/ der dritten Radebene (III) verläuft.

17. Doppelkupplungsgetriebe nach einem der vorangehenden Ansprüche, **dadurch gekennzeichnet, dass** zur Hybridisierung zumindest eine elektrische Maschine (EM) vorgesehen ist, wobei die Anbindung der elektrischen Maschine (EM) derart erfolgt, dass sowohl eine Verbindung der elektrischen Maschine (EM) zu einer der Kupplungen (K1, K2) als auch zur Abtriebswelle (AB) schaltbar ist.

## Claims

1. Dual clutch transmission of countershaft design for a vehicle, having two clutches (K1, K2), the input sides of which are connected to a drive shaft (AN) and the output sides of which are connected to in each case one of two transmission input shafts (EW1, EW2) which are arranged coaxially with respect to a main shaft axis and are in each case assigned a component transmission, having at least two countershafts (VW1, VW2), having a plurality of gear planes (I, II, III, V, VI, VII) which are assigned transmission stages (A, B, C, D, E, F, G, H, I), and having at least one output shaft (AB) which can be connected via an output gear plane (IV) to the component transmissions, **characterized in that** only six gear planes (I, II, III, V, VI, VII), without the output gear plane (IV), with at least nine associated transmission stages (A, B, C, D, E, F, G, H, I) can be provided via only four double shifting elements (S1-S2, S3-S4, S5-S6, S7-S8) and via at least one single shifting element (S9, S10), it being possible for each countershaft (VW1, VW2) to be coupled to four transmission stages (A, B, C, D; E, F, G, H) of the at least nine transmission stages via double shifting elements (S1-S2, S3-S4, S5-S6, S7-S8) of the only four double shifting elements, and it being possible for one of the transmission input shafts (EW1, EW2) to be coupled to a further transmission stage (I) of the at least nine transmission stages via a first single shifting element (S9) of the at least one single shifting element (S9, S10), the output gear plane (IV) lying between the two component transmissions.

2. Dual clutch transmission according to Claim 1, **characterized in that** the first transmission input shaft (EW1) is configured as a solid shaft which is assigned two fixed gears (Z4, Z5) which are arranged coaxially with respect to the main shaft axis and an idler gear (Z6) which is arranged coaxially with respect to the main shaft axis, it being possible for the idler gear (Z6) to be connected via the first single shifting element (S9) to the first transmission input shaft (EW1).

3. Dual clutch transmission according to either of the preceding claims, **characterized in that** the second transmission input shaft (EW2) is configured as a hollow shaft which is assigned three fixed gears (Z1, Z2, Z3) which are arranged coaxially with respect to the main shaft axis.

4. Dual clutch transmission according to one of the preceding claims, **characterized in that** the first countershaft (VW1) is configured as a solid shaft which is arranged coaxially with respect to a first countershaft axis, the first countershaft (VW1) being assigned a fixed gear (Z17) which is arranged coaxially with respect to the first countershaft axis as an output constant and four idler gears (Z7, Z8, Z9, Z10) which are arranged coaxially with respect to the first countershaft axis, it being possible for the first idler gear (Z7) of the first countershaft and the second idler gear (Z8) of the first countershaft to be connected in each case via the first double shifting element (S1-S2) of the only four double shifting elements and for the third idler gear (Z9) of the first countershaft and the fourth idler gear (Z10) of the first countershaft to be connected in each case via the second double shifting element (S5-S6) of the only four double shifting elements to the first countershaft (VW1) .

5. Dual clutch transmission according to one of the preceding claims, **characterized in that** the second countershaft (VW2) is configured as a solid shaft, the second countershaft (VW2) being assigned two fixed gears (Z18, Z15) which are arranged coaxially with respect to the second countershaft axis and four idler gears (Z11, Z12, Z13, Z14) which are arranged coaxially with respect to the second countershaft axis, it being possible for the first idler gear (Z11) of the second countershaft and the second idler gear (Z12) of the second countershaft to be connected in each case via the third double shifting element (S3-S4) of the only four double shifting elements and for the third idler gear (Z13) of the second countershaft and the fourth idler gear (Z14) of the second countershaft to be connected in each case via the fourth double shifting element (S7-S8) of the only four double shifting elements to the second countershaft (VW2), and the first fixed gear (Z18) of the two fixed gears which are arranged coaxially with respect to the second countershaft axis being provided as an output constant.

6. Dual clutch transmission according to Claims 2, 3, 4 and 5, **characterized in that**, in a first gear plane (I), the first fixed gear (Z1) of the second transmission input shaft (EW2) is in engagement in the first gear plane both with the first idler gear (Z7) of the first countershaft (VW1) and with the first idler gear (Z11) of the second countershaft (VW2), **in that**, in a second gear plane (II), the second fixed gear (Z2) of the second transmission input shaft (EW2) is in engagement in the second gear plane with the second idler gear (Z8) of the first countershaft (VW1), **in that**, in a third gear plane (III), the third fixed gear (Z3) of the second transmission input shaft (EW2) is in engagement in the third gear plane with the second idler gear (Z12) of the second countershaft (VW2), **in that**, in a fourth gear plane (IV) as an output gear plane, a fixed gear (Z16) of the output shaft (AB) meshes both with the fixed gear (Z17) of the first countershaft (VW1) in the fourth gear plane and with the first fixed gear (Z18) of the second countershaft (VW2) in the fourth gear plane, **in that**, in a fifth gear plane (V), the first fixed gear (Z4) of the first transmission input shaft (EW1) is in engagement in the fifth gear plane both with the third idler gear (Z9) of the first countershaft (VW1) and with an intermediate gear (ZW) for the reversal of the rotational direction, the intermediate gear (ZW) meshing with the third idler gear (Z13) of the second countershaft, **in that**, in a sixth gear plane (VI), the second fixed gear (Z5) of the first transmission input shaft (EW1) is in engagement in the sixth gear plane both with the fourth idler gear (Z10) of the first countershaft (VW1) and with the fourth idler gear (Z14) of the second countershaft (VW2), and **in that**, in a seventh gear plane (VII), the idler gear (Z6) of the first transmission input shaft (EW1) meshes with the second fixed gear (Z15) of the second countershaft (VW2) in the seventh gear plane.

7. Dual clutch transmission according to Claim 6, **characterized in that** a first transmission stage (A) can be shifted, starting from the second clutch (K2), via the second transmission input shaft (EW2), it being possible for the power flow, in the case of an activated first shifting element (S1) of the first double shifting element, to be transmitted via the first gear plane (I) to the first countershaft (VW1) and via the fourth gear plane (IV) to the output shaft (AB), **in that** a second transmission stage (B) can be shifted, starting from the second clutch (K2), via the second transmission input shaft (EW2), it being possible for the power flow, in the case of an activated second shifting element (S2) of the first double shifting element, to be transmitted via the second gear plane (II) to the first countershaft (VW1) and via the fourth gear plane (IV) to the output shaft (AB), **in that** a third transmission stage (C) can be shifted, starting from the first clutch (K1), via the first transmission input shaft (EW1), it being possible for the power flow, in the case of an activated first shifting element (S5) of the second double shifting element, to be transmitted via the fifth gear plane (V) to the first countershaft (VW1) and via the fourth gear plane (IV) to the output shaft (AB), **in that** a fourth transmission stage (D) can be shifted, starting from the first clutch (K1), via the first transmission input shaft (EW1), it being possible for the power flow, in the case of an activated second shifting element (S6) of the second double shifting element, to be transmitted via the sixth gear plane (VI) to the first countershaft (VW1) and via the fourth gear plane (IV) to the output shaft (AB), **in that** a fifth transmission stage (E) can be shifted, starting from the second clutch (K2), via the second transmission input shaft (EW2), it being possible for the power flow, in the case of an activated first shifting element (S3) of the third double shifting element, to be transmitted via the first gear plane (I) to the second countershaft (VW2) and via the fourth gear plane (IV) to the output shaft (AB), **in that** a sixth transmission stage (F) can be shifted, starting from the second clutch (K2), via the second transmission input shaft (EW2), it being possible for the power flow, in the case of an activated second shifting element (S4) of the third double shifting element, to be transmitted via the third gear plane (III) to the second countershaft (VW2) and via the fourth gear plane (IV) to the output shaft (AB), **in that** a seventh transmission stage (G) can be shifted, starting from the first clutch (K1), via the first transmission input shaft (EW1), it being possible for the power flow, in the case of an activated first shifting element (S7) of the fourth double shifting element, to be transmitted via the fifth gear plane (V) to the second countershaft (VW2) and via the fourth gear plane (IV) to the output shaft (AB), **in that** an eighth transmission stage (H) can be shifted, starting from the first clutch (K1), via the first transmission input shaft (EW1), it being possible for the power flow, in the case of an activated second shifting element (S8) of the fourth double shifting element, to be transmitted via the sixth gear plane (VI) to the second countershaft (VW2) and via the fourth gear plane (IV) to the output shaft (AB), and **in that** a ninth transmission stage (I) can be shifted, starting from the first clutch (K1), via the first transmission input shaft (EW1), it being possible for the power flow, in the case of an activated second shifting element (S8) of the fourth double shifting element, to be transmitted via the seventh gear plane (VII) to the second countershaft (VW2) and via the fourth gear plane (IV) to the output shaft (AB).

8. Dual clutch transmission according to one of the preceding claims, **characterized in that** a/the third transmission stage (C) of the first component transmission is assigned to the first forward gear stage (R1), **in that** a/the sixth transmission stage (F) of the first component transmission is assigned to the second forward gear stage (R2), **in that** a/the ninth transmission stage (I) of the first component transmission is assigned to the third forward gear stage (R3), **in that** a/the second transmission stage (B) of the second component transmission is assigned to the fourth forward gear stage (R4), **in that** a/the eighth transmission stage (H) of the first component transmission is assigned to the fifth forward gear stage (R5), **in that** a/the fifth transmission stage (E) of the second component transmission is assigned to the sixth forward gear stage (R6), **in that** a/the fourth transmission stage (D) of the first component transmission is assigned to the seventh forward gear stage (R7), **in that** a/the first transmission stage (A) of the second component transmission is assigned to the eighth forward gear stage (R8), and **in that** a/the seventh transmission stage (G) of the second component transmission is assigned to the reverse gear stage (RR) .

9. Dual clutch transmission according to one of the preceding claims, **characterized in that** components within the first component transmission can be mirrored on predefined mirror planes (SP1, SP2).

10. Dual clutch transmission according to Claim 9, **characterized in that** a first mirror plane (SP1) runs along the main shaft axis in the region of the first component transmission.

11. Dual clutch transmission according to Claim 9 or 10, **characterized in that** a second mirror plane (SP2) runs perpendicularly with respect to the main shaft axis along a/the sixth gear plane (VI).

12. Dual clutch transmission according to one of the preceding claims, **characterized in that** components within the second component transmission can be mirrored on mirror planes (SP3, SP4, SP5, SP6).

13. Dual clutch transmission according to Claim 12, **characterized in that** a third mirror plane (SP3) runs along the main shaft axis in the region of the second component transmission.

14. Dual clutch transmission according to Claim 12 or 13, **characterized in that** a fourth mirror plane (SP4) runs perpendicularly with respect to the main shaft axis along a/the second gear plane (II).

15. Dual clutch transmission according to one of Claims 12 to 14, **characterized in that** a fifth mirror plane (SP5) runs perpendicularly with respect to the main shaft axis centrally between a/the first gear plane (I) and a/the second gear plane (II).

16. Dual clutch transmission according to one of Claims 12 to 15, **characterized in that** a sixth mirror plane (SP6) runs perpendicularly with respect to the main shaft axis centrally between a/the second gear plane (II) and a/the third gear plane (III).

17. Dual clutch transmission according to one of the preceding claims, **characterized in that** at least one electric machine (EM) is provided for hybridization purposes, the attachment of the electric machine (EM) taking place in such a way that a connection of the electric machine (EM) both to one of the clutches (K1, K2) and to the output shaft (AB) can be shifted.

## Revendications

1. Boîte de vitesses à double embrayage à construction à arbre intermédiaire pour un véhicule, avec deux embrayages (K1, K2) dont les côtés d'entrée sont connectés à un arbre d'entraînement (AN) et dont les côtés de sortie sont connectés à chaque fois à l'un parmi deux arbres d'entrée de boîte de vitesses (EW1, EW2) disposés coaxialement par rapport à un axe d'arbre principal, auxquels est à chaque fois associée une boîte de vitesses partielle, avec au moins deux arbres intermédiaires (VW1, VW2), avec plusieurs plans de roue (I, II, III, V, VI, VII) auxquels sont associés des rapports de transmission (A, B, C, D, E, F, G, H, I), et avec au moins un arbre de prise de force (AB) qui peut être connecté aux boîtes de vitesses partielles par le biais d'un plan de roue de prise de force (IV), **caractérisée en ce que** seulement six plans de roue (I, II, III, V, VI, VII), sans le plan de roue de prise de force (IV), peuvent être réalisés avec au moins neuf rapports de transmission associés (A, B, C, D, E, F, G, H, I) par le biais de seulement quatre éléments de commutation doubles (S1-S2, S3-S4, S5-S6, S7-S8) et par le biais d'au moins un élément de commutation simple (S9, S10), chaque arbre intermédiaire (VW1, VW2) pouvant être accouplé avec quatre rapports de transmission (A, B, C, D ; E, F, G, H) des au moins neuf rapports de transmission par le biais d'éléments de commutation doubles (S1-S2, S3-S4, S5-S6, S7-S8) des seulement quatre éléments de commutation doubles et l'un des arbres d'entrée de boîte de vitesses (EW1, EW2) pouvant être accouplé à un autre rapport de transmission (I) des au moins neuf rapports de transmission par le biais d'un premier élément de commutation simple (S9) de l'au moins un élément de commutation simple (S9, S10), le plan de roue de prise de force (IV) étant situé entre les deux boîtes de vitesses partielles.

2. Boîte de vitesses à double embrayage selon la revendication 1, **caractérisée en ce que** le premier arbre d'entrée de boîte de vitesses (EW1) est réalisé sous forme d'arbre plein auquel sont associées deux roues fixes (Z4, Z5) disposées coaxialement par rapport à l'axe d'arbre principal et une roue libre (Z6) disposée coaxialement par rapport à l'axe d'arbre principal, la roue libre (Z6) pouvant être connectée au premier arbre d'entrée de boîte de vitesses (EW1) par le biais du premier élément de commutation simple (S9).

3. Boîte de vitesses à double embrayage selon l'une quelconque des revendications précédentes, **caractérisée en ce que** le deuxième arbre d'entrée de boîte de vitesses (EW2) est réalisé sous forme d'arbre creux auquel sont associées trois roues fixes (Z1, Z2, Z3) disposées coaxialement par rapport à l'axe d'arbre principal.

4. Boîte de vitesses à double embrayage selon l'une quelconque des revendications précédentes, **caractérisée en ce que** le premier arbre intermédiaire (VW1) est réalisé sous forme d'arbre plein qui est disposé coaxialement par rapport à un premier axe d'arbre intermédiaire, au premier arbre intermédiaire (VW1) étant associées une roue fixe (Z17) disposée coaxialement par rapport au premier axe d'arbre intermédiaire en tant que constante de prise de force et quatre roues libres (Z7, Z8, Z9, Z10) disposées coaxialement par rapport au premier axe d'arbre intermédiaire, la première roue libre (Z7) du premier arbre intermédiaire et la deuxième roue libre (Z8) du premier arbre intermédiaire pouvant être connectées à chaque fois par le biais du premier élément de commutation double (S1-S2) des seulement quatre éléments de commutation doubles, et la troisième roue libre (Z9) du premier arbre intermédiaire et la quatrième roue libre (Z10) du premier arbre intermédiaire pouvant être connectées à chaque fois par le biais du deuxième élément de commutation double (S5-S6) des seulement quatre éléments de commutation doubles, à chaque fois au premier arbre intermédiaire (VW1) .

5. Boîte de vitesses à double embrayage selon l'une quelconque des revendications précédentes, **caractérisée en ce que** le deuxième arbre intermédiaire (VW2) est réalisé sous forme d'arbre plein, au deuxième arbre intermédiaire (VW2) étant associées deux roues fixes (Z18, Z15) disposées coaxialement par rapport au deuxième axe d'arbre intermédiaire et quatre roues libres (Z11, Z12, Z13, Z14) disposées coaxialement par rapport au deuxième axe d'arbre intermédiaire, la première roue libre (Z11) du deuxième arbre intermédiaire et la deuxième roue libre (Z12) du deuxième arbre intermédiaire pouvant être connectées à chaque fois par le biais du troisième élément de commutation double (S3-S4) des seulement quatre éléments de commutation doubles, et la troisième roue libre (Z13) du deuxième arbre intermédiaire et la quatrième roue libre (Z14) du deuxième arbre intermédiaire pouvant être connectées à chaque fois par le biais du quatrième élément de commutation double (S7-S8) des seulement quatre éléments de commutation doubles, à chaque fois au deuxième arbre intermédiaire (VW2) et la première roue fixe (Z18) des deux roues fixes disposées coaxialement par rapport au deuxième axe d'arbre intermédiaire étant prévue en tant que constante de prise de force.

6. Boîte de vitesses à double embrayage selon les revendications 2, 3, 4 et 5, **caractérisée en ce que** dans un premier plan de roue (I), la première roue fixe (Z1) du deuxième arbre d'entrée de boîte de vitesses (EW2) dans le premier plan de roue est en prise à la fois avec la première roue libre (Z7) du premier arbre intermédiaire (VW1) et avec la première roue libre (Z11) du deuxième arbre intermédiaire (VW2), **en ce que** dans un deuxième plan de roue (II), la deuxième roue fixe (Z2) du deuxième arbre d'entrée de boîte de vitesses (EW2) dans le deuxième plan de roue est en prise avec la deuxième roue libre (Z8) du premier arbre intermédiaire (VW1), **en ce que** dans un troisième plan de roue (III) la troisième roue fixe (Z3) du deuxième arbre d'entrée de boîte de vitesses (EW2) dans le troisième plan de roue est en prise avec la deuxième roue libre (Z12) du deuxième arbre intermédiaire (VW2), **en ce que** dans un quatrième plan de roue (IV) en tant que plan de roue de prise de force, une roue fixe (Z16) de l'arbre de prise de force (AB) s'engrène à la fois avec la roue fixe (Z17) du premier arbre intermédiaire (VW1) dans le quatrième plan de roue et avec la première roue fixe (Z18) du deuxième arbre intermédiaire (VW2) dans le quatrième plan de roue, **en ce que** dans un cinquième plan de roue (V), la première roue fixe (Z4) du premier arbre d'entrée de boîte de vitesses (EW1) dans le cinquième plan de roue est en prise à la fois avec la troisième roue libre (Z9) du premier arbre intermédiaire (VW1) et avec une roue intermédiaire (ZW) en vue d'une inversion du sens de rotation, la roue intermédiaire (ZW) s'engrenant avec la troisième roue libre (Z13) du deuxième arbre intermédiaire, **en ce que** dans un sixième plan de roue (VI), la deuxième roue fixe (Z5) du premier arbre d'entrée de boîte de vitesses (EW1) dans le sixième plan de roue est en prise à la fois avec la quatrième roue libre (Z10) du premier arbre intermédiaire (VW1) et avec la quatrième roue libre (Z14) du deuxième arbre intermédiaire (VW2), et **en ce que** dans un septième plan de roue (VII), la roue libre (Z6) du premier arbre d'entrée de boîte de vitesses (EW1) s'engrène avec la deuxième roue fixe (Z15) du deuxième arbre intermédiaire (VW2) dans le septième plan de roue.

7. Boîte de vitesses à double embrayage selon la revendication 6, **caractérisée en ce qu'**un premier rapport de transmission (A) peut être commuté à partir du deuxième embrayage (K2) par le biais du deuxième arbre d'entrée de boîte de vitesses (EW2), le flux de puissance, lorsque le premier élément de commutation (S1) du premier élément de commutation double est activé, pouvant être transmis par le biais du premier plan de roue (I) au premier arbre intermédiaire (VW1) et par le biais du quatrième plan de roue (IV) à l'arbre de prise de force (AB), **en ce qu'**un deuxième rapport de transmission (B) peut être commuté à partir du deuxième embrayage (K2) par le biais du deuxième arbre d'entrée de boîte de vitesses (EW2), le flux de puissance, lorsque le deuxième élément de commutation (S2) du premier élément de commutation double est activé, pouvant être transmis par le biais du deuxième plan de roue (II) au premier arbre intermédiaire (VW1) et par le biais du quatrième plan de roue (IV) à l'arbre de prise de force (AB), **en ce qu'**un troisième rapport de transmission (C) peut être commuté à partir du premier embrayage (K1) par le biais du premier arbre d'entrée de boîte de vitesses (EW1), le flux de puissance, lorsque le premier élément de commutation (S5) du deuxième élément de commutation double est activé, pouvant être transmis par le biais du cinquième plan de roue (V) au premier arbre intermédiaire (VW1) et par le biais du quatrième plan de roue (IV) à l'arbre de prise de force (AB), **en ce qu'**un quatrième rapport de transmission (D) peut être commuté à partir du premier embrayage (K1) par le biais du premier arbre d'entrée de boîte de vitesses (EW1), le flux de puissance, lorsque le deuxième élément de commutation (S6) du deuxième élément de commutation double est activé, pouvant être transmis par le biais du sixième plan de roue (VI) au premier arbre intermédiaire (VW1) et par le biais du quatrième plan de roue (IV) à l'arbre de prise de force (AB), **en ce qu'**un cinquième rapport de transmission (E) peut être commuté à partir du deuxième embrayage (K2) par le biais du deuxième arbre d'entrée de boîte de vitesses (EW2), le flux de puissance, lorsque le premier élément de commutation (S3) du troisième élément de commutation double est activé, pouvant être transmis par le biais du premier plan de roue (I) au deuxième arbre intermédiaire (VW2) et par le biais du quatrième plan de roue (IV) à l'arbre de prise de force (AB), **en ce qu'**un sixième rapport de transmission (F) peut être commuté à partir du deuxième embrayage (K2) par le biais du deuxième arbre d'entrée de boîte de vitesses (EW2), le flux de puissance, lorsque le deuxième élément de commutation (S4) du troisième élément de commutation double est activé, pouvant être transmis par le biais du troisième plan de roue (III) au deuxième arbre intermédiaire (VW2) et par le biais du quatrième plan de roue (IV) à l'arbre de prise de force (AB), **en ce qu'**un septième rapport de transmission (G) peut être commuté à partir du premier embrayage (K1) par le biais du premier arbre d'entrée de boîte de vitesses (EW1), le flux de puissance, lorsque le premier élément de commutation (S7) du quatrième élément de commutation double est activé, pouvant être transmis par le biais du cinquième plan de roue (V) au deuxième arbre intermédiaire (VW2) et par le biais du quatrième plan de roue (IV) à l'arbre de prise de force (AB), **en ce qu'**un huitième rapport de transmission (H) peut être commuté à partir du premier embrayage (K1) par le biais du premier arbre d'entrée de boîte de vitesses (EW1), le flux de puissance, lorsque le deuxième élément de commutation (S8) du quatrième élément de commutation double est activé, pouvant être transmis par le biais du sixième plan de roue (VI) au deuxième arbre intermédiaire (VW2) et par le biais du quatrième plan de roue (IV) à l'arbre de prise de force (AB), et **en ce qu'**un neuvième rapport de transmission (I) peut être commuté à partir du premier embrayage (K1) par le biais du premier arbre d'entrée de boîte de vitesses (EW1), le flux de puissance, lorsque le deuxième élément de commutation (S8) du quatrième élément de commutation double est activé, pouvant être transmis par le biais du septième plan de roue (VII) au deuxième arbre intermédiaire (VW2) et par le biais du quatrième plan de roue (IV) à l'arbre de prise de force (AB).

8. Boîte de vitesses à double embrayage selon l'une quelconque des revendications précédentes, **caractérisée en ce qu'**un/le troisième rapport de transmission (C) de la première boîte de vitesses partielle est associé au premier rapport de marche avant (R1), **en ce qu'**un/le sixième rapport de transmission (F) de la première boîte de vitesses partielle est associé au deuxième rapport de marche avant (R2), **en ce qu'**un/le neuvième rapport de transmission (I) de la première boîte de vitesses partielle est associé au troisième rapport de marche avant (R3), **en ce qu'**un/le deuxième rapport de transmission (B) de la deuxième boîte de vitesses partielle est associé au quatrième rapport de marche avant (R4), **en ce qu'**un/le huitième rapport de transmission (H) de la première boîte de vitesses partielle est associé au cinquième rapport de marche avant (R5), **en ce qu'**un/le cinquième rapport de transmission (E) de la deuxième boîte de vitesses partielle est associé au sixième rapport de marche avant (R6), **en ce qu'**un/le quatrième rapport de transmission (D) de la première boîte de vitesses partielle est associé au septième rapport de marche avant (R7), **en ce qu'**un/le premier rapport de transmission (A) de la deuxième boîte de vitesses partielle est associé au huitième rapport de marche avant (R8), et **en ce qu'**un/le septième rapport de transmission (G) de la deuxième boîte de vitesses partielle est associé au rapport de marche arrière (RR).

9. Boîte de vitesses à double embrayage selon l'une quelconque des revendications précédentes, **caractérisée en ce que** des composants à l'intérieur de la première boîte de vitesses partielle peuvent être reproduits par symétrie spéculaire sur des plans de symétrie spéculaire prédéfinis (SP1, SP2) .

10. Boîte de vitesses à double embrayage selon la revendication 9, **caractérisée en ce qu'**un premier plan de symétrie spéculaire (SP1) s'étend le long de l'axe d'arbre principal dans la région de la première boîte de vitesses partielle.

11. Boîte de vitesses à double embrayage selon la revendication 9 ou 10, **caractérisée en ce qu'**un deuxième plan de symétrie spéculaire (SP2) s'étend perpendiculairement à l'axe d'arbre principal le long d'un/du sixième plan de roue (VI).

12. Boîte de vitesses à double embrayage selon l'une quelconque des revendications précédentes, **caractérisée en ce que** des composants à l'intérieur de la deuxième boîte de vitesses partielle peuvent être reproduits par symétrie spéculaire sur des plans de symétrie spéculaire (SP3, SP4, SP5, SP6).

13. Boîte de vitesses à double embrayage selon la revendication 12, **caractérisée en ce qu'**un troisième plan de symétrie spéculaire (SP3) s'étend le long de l'axe d'arbre principal dans la région de la deuxième boîte de vitesses partielle.

14. Boîte de vitesses à double embrayage selon la revendication 12 ou 13, **caractérisée en ce qu'**un quatrième plan de symétrie spéculaire (SP4) s'étend perpendiculairement à l'axe d'arbre principal le long d'un/du deuxième plan de roue (II).

15. Boîte de vitesses à double embrayage selon l'une quelconque des revendications 12 à 14, **caractérisée en ce qu'**un cinquième plan de symétrie spéculaire (SP5) s'étend perpendiculairement à l'axe d'arbre principal centralement entre un/le premier plan de roue (I) et un/le deuxième plan de roue (II).

16. Boîte de vitesses à double embrayage selon l'une quelconque des revendications 12 à 15, **caractérisée en ce qu'**un sixième plan de symétrie spéculaire (SP6) s'étend perpendiculairement à l'axe d'arbre principal centralement entre un/le deuxième plan de roue (II) et un/le troisième plan de roue (III).

17. Boîte de vitesses à double embrayage selon l'une quelconque des revendications précédentes, **caractérisée en ce qu'**au moins une machine électrique (EM) est prévue pour l'hybridisation, la liaison de la machine électrique (EM) s'effectuant de telle sorte qu'à la fois une connexion de la machine électrique (EM) à l'un des embrayages (K1, K2) ainsi qu'à l'arbre de prise de force (AB) puisse être commutée.
